# EUROPEAN PATENT APPLICATION

(11) **EP 1 365 105 A1**
(43) Date of publication of application: **26.11.2003**
(21) Application number: 03011045.6
(22) Date of filing: 19.05.2003
(51) Int. Cl.: F01C 1/14, B60C 25/132, F01C 21/00, F01C 21/16, F01C 21/12

(54) **Reversible gearwheels volumetric machine**

(30) Priority: 21.05.2002 IT VR20020056
(71) Applicant: BUTLER ENGINEERING & MARKETING S.r.l., 42010 Rio Saliceto (Reggio Emilia) (IT)
(72) Inventor: Gonzaga, Tullio, 42015 Correggio (Reggio Emilia) (IT)
(74) Representative: Reniero, Cirillo Silvano

(57) **Abstract**

The invention relates to a fluid operated reversible volumetric machine comprising a receiving housing (C), at least two pairs of gear elements (I) mounted for rotation in the receiving housing (C) so that each gear element (I) is in meshing engagement with two adjoining gear elements (I) equal to it, an outer peripheral sequence, with respect to the gear elements, of suction openings or inlets (E) alternating with as many delivery openings or outlet (U) formed in the receiving housing (C), an inner peripheral sequence, with respect to the gear elements, of delivery openings or outlets (U), alternating with as many suction openings or inlets (E) formed in the receiving housing (E), each outer and inner sequence comprising a number of inlets (E) or outlets (U) equal to the number of gear elements (I).

## Description

The present invention relates to a fluid operated reversible volumetric machine, particularly, but not exclusively, for driving self-centring assemblies in tire assembling/disassembling machines.

As known, fluid operated volumetric machines are generally classified in three categories, each having specific structural and operative features, that depend on specific use-related requirements, namely: rotating vane machines, (axial as well as radial) piston machines, and gear, screw or special gearing machines.

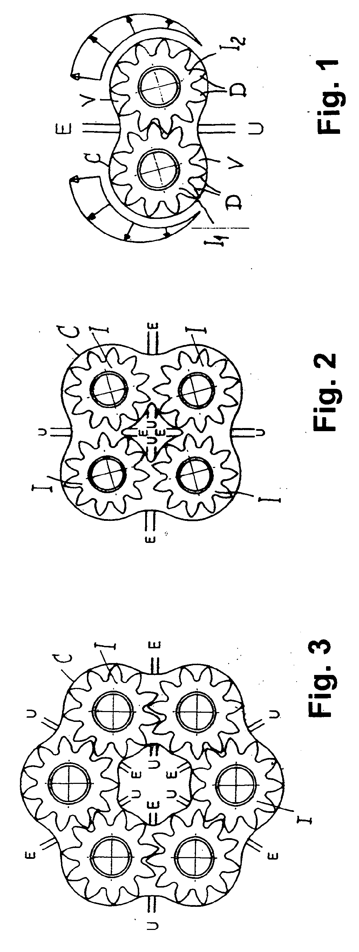

Amongst fluid operated volumetric machines, the simplest to be produced and most cost-effective to be operated are undoubtedly the outer toothing gear machines, comprising one pair of gear elements 11 and 12 - see Figure 1 in the accompanying drawings - in mutual meshing engagement and mounted for rotation in a receiving housing C, in which on one side a suction intake opening or inlet E and, on the other, a delivery opening or outlet U are provided, the outlet U being located opposite to drawing mouth E with respect to the parallel axes of rotation of gear elements I₁ and I₂ By causing the gear elements I₁ and I₂ to rotate, a suction pressure builds up at the suction inlet E. If suction inlet E is set into communication with a working fluid (water, oil, air, etc.) source, not shown in Figure 1, the working fluid is sucked into housing C and delivered under pressure through the delivery outlet U. On he other hand, should a pressurised working fluid be fed to inlet E, the volumetric machine becomes a motor with an output shaft formed by one of the axes of rotation of the pair of gear elements I.

The volume of the spaces V between teeth D multiplied by the number of teeth gives the displacement of the volumetric machine that, as said, can be used as a pump or as a motor.

Such a gear machine has, however, some disadvantageous shortcomings such as a relatively low yield, an excessive pulsations in the working fluid flow rate, a loud noise and high operation speeds within a very narrow range. Pulsations or volume variations in the working fluid and the noise are due to the fact that the number of gear teeth is very small generally speaking. Moreover, the pair of gear elements is consistently subjected, in use, to a radial thrust, since the working fluid is subjected to different pressures at the suction inlet (fluid intake) and at the delivery outlet (fluid outlet) . Such a radial thrust is responsible for severe wear of the gears and low volumetric yield.

Additionally, each fluid conveyance spacer V at one gear element must be rotated through a 360° before being once again in meshing engagement with a tooth D of the other gear element. This means that it is inoperative throughout most of its circular path, i. e. it does not contribute to the working fluid displacement, as shown by the thrust or power diagram shown next to each gear element I₁ and I₂ in Fig. 1.

The main object of the present invention is to obviate the shortcomings referred to above in connection with the prior art, by providing a reversible volumetric gear machine which, while having a simple structure typical of a machine of this type, makes it possible to vary its speed as a function of the load torque.

Another object of the present invention is to provide a reversible volumetric gear machine with a high yield and very little wear in the gear elements.

A further object of the present invention is to provide a tire disassembling equipment having a volumetric machine according to the present invention designed to be used as a motor..

These and other objects that will be better apparent below are attained by a reversible fluid operated machine according to the present invention, comprising a receiving housing, at least two pairs of gear elements mounted for rotation in the receiving housing, so that each gear element is in meshing engagement with two adjoining gear elements equal thereto, an outer peripheral sequence with respect to the gear elements, of suction inlets alternating with as many delivery outlets formed in the receiving housing, and an inner peripheral sequence with respect to the gear elements, of delivery outlets, respectively, alternating with as many suction inlets formed in the receiving housing, each inner and outer sequence comprising a number of inlets and outlets equal to the number of gear elements.

Further aspects and advantages of the present invention will be better apparent from the following detailed description of some of currently preferred not exclusive embodiments thereof, of a fluid-operated reversible volumetric machine illustrated by way of not limiting example, in Figures 2 to 11 of the accompanying drawings, in which:
Figure 1 is a diagrammatic top plan view showing a fluid operated volumetric machine having one pair of gear elements according to the state of the art,
Figure 2 is a diagrammatic top plan view of a fluid operated volumetric machine having two pairs of gear elements according to the present invention;
Figure 3 shows a diagrammatic top plan view of a fluid-operated volumetric machine having three pairs of gear elements according to the present invention;
Figure 4 is a diagrammatic top plan view of a fluid-operated volumetric machine having six pairs of gear elements according to the present invention;
Figure 5 shows a partial longitudinal section view on an enlarged scale of a fluid operated volumetric machine according to the present invention arranged to operate as a motor;
Figure 6 is a top plan view of the motor shown in Figure 5 that illustrates six pairs of gear elements fitted in a ring-shaped housing;
Figure 7 shows a diagrammatic view of the housing of the motor shown in Fig. 6 with connecting paths between inlets and outlets for the working fluid;
Figure 8 shows a hydraulic diagram of the motor of Fig. 5 with a delivery valve arranged between the working fluid source and the motor;
Figure 9 is a diagrammatic elevation side view of a tire assembling/disassembling equipment having an in-built volumetric machine acting as a motor, according to the present invention;
Figure 10 is a diagrammatic view of another embodiment of a volumetric machine according to the present invention; and
Figure 11 is a diagrammatic view showing the connections between the inlets of the volumetric machine shown in Fig. 10.

In the accompanying drawings, the same or similar parts or components are designated by the same reference numerals.

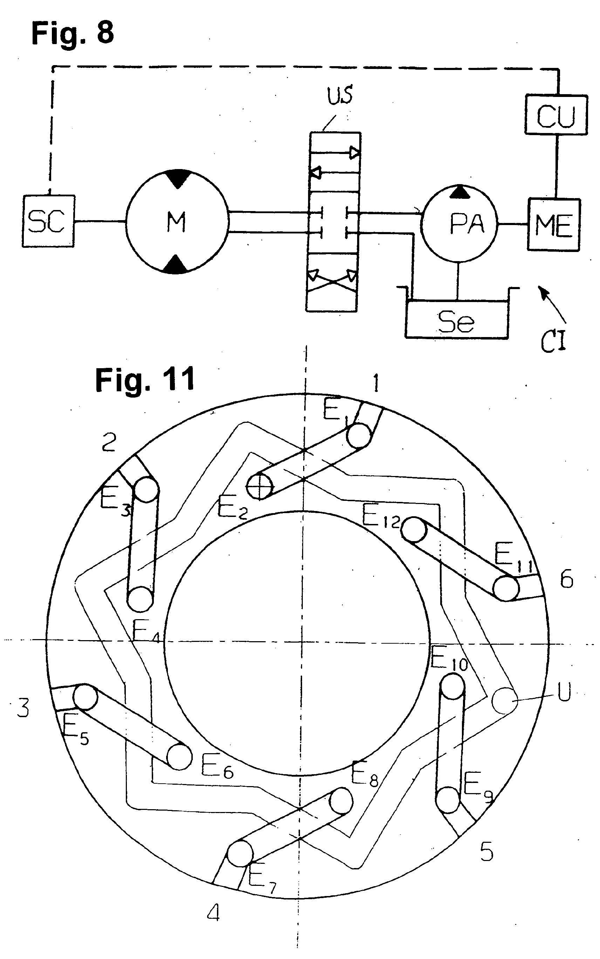

With reference first to Figures 2 to 8, it will be noted that three embodiments of a fluid-operated reversible volumetric machine according to the present invention are diagrammatically illustrated. The volumetric machine comprises a receiving housing C and two, three or six pairs of gear elements I, respectively, mounted for rotation in the receiving housing C. Each gear element I is in a meshing engagement with two adjoining gear elements equal to it. Between one gear element and the other, an inlet opening E as well as an outlet opening U are provided for a working fluid fed from a fluid source P (Fig. 8).. Opening U, however, is arranged on the opposite side with respect to the inlet opening E with reference to the axes of its respective pair of gear elements. The inlet openings E and outlet openings U are alternating according to a peripheral sequence outside the gear elements and a peripheral sequence inside the gear elements, as shown in the drawings. Each outer and inner sequence is formed by a number of inlet and outlet openings equal to the number of gear elements I.

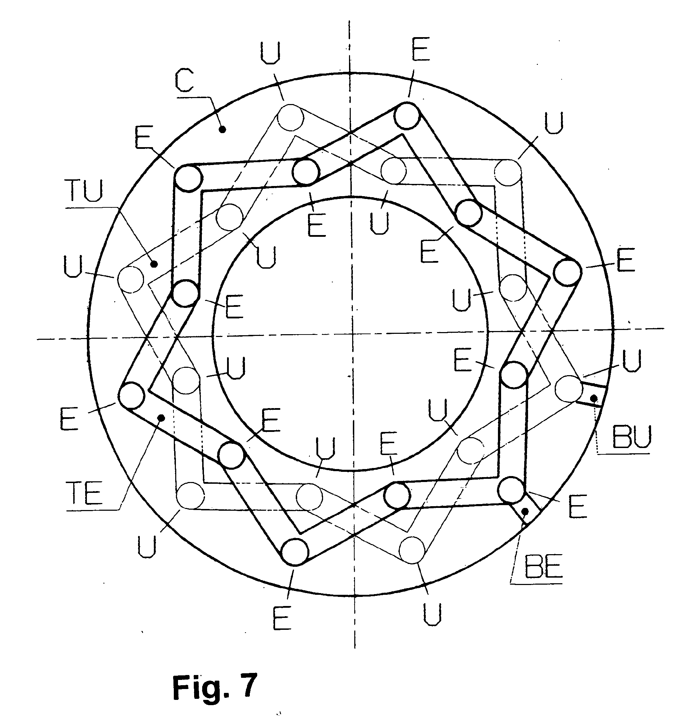

From the structural view point, the various inlet openings E are in communication with each other because they are mutually connected by a manifold duct TE (Fig. 7) which is in communication with the fluid source P through an inlet mouth BE, whereas the various outlet openings U are in mutual communication through a collection duct TU leading to a working fluid recovery reservoir SE (Fig. 8) via an outlet opening BU, e.g by means of a standard circuit for a hydraulic unit driven by an electric motor,

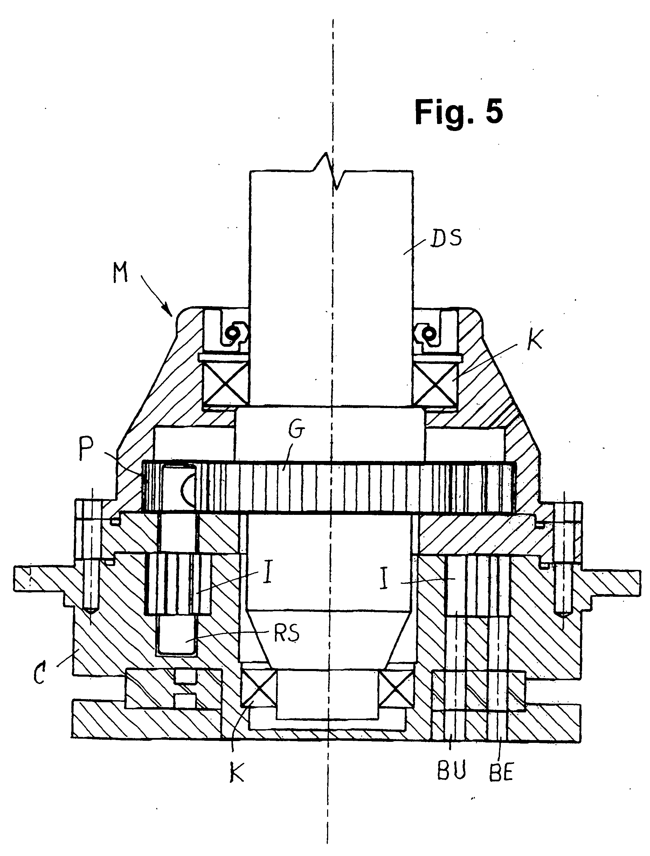

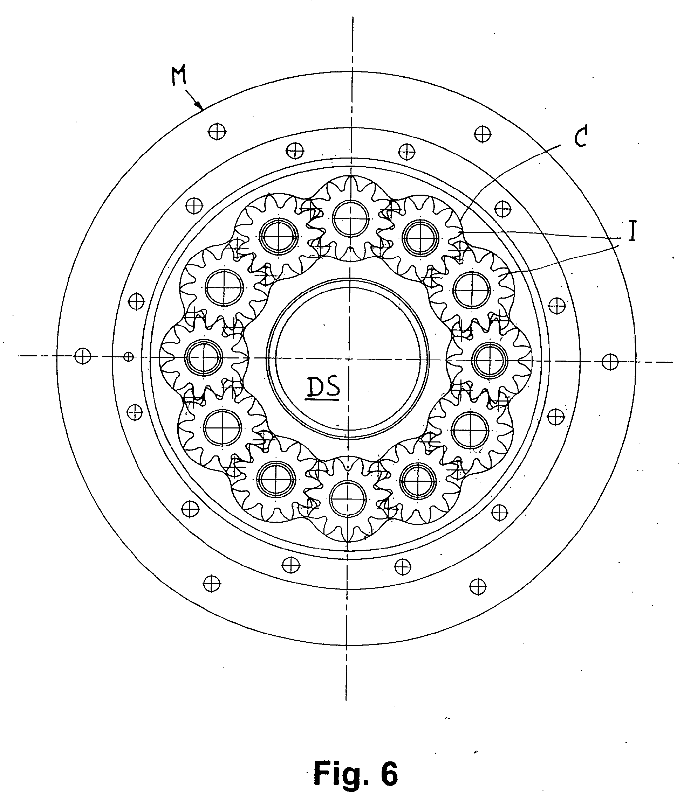

Figs. 5 and 6 show some structural details of a volumetric machine according to the present invention, designed to operate as a motor M. It will be noted that each gear element I is keyed onto a respective rotating shaft RS, in turn mounted for rotation in an annular housing C. Shafts RS of the various gear elements I are arranged uniformly angularly spaced from each other along a circumference, and extend parallel to a driven shaft DS mounted for rotation on a pair of bearings K coaxially with housing C..

The rotating shaft RS of one gear element I of each pair of gear elements also supports a respective pinion gear P keyed onto it, preferably located outside housing C, and in meshing engagement with a gear element G which is keyed onto driven shaft DS, whereby the rotation of the various pinion gears P results in the driven shaft DS (also referred to as the motor output shaft) being driven.

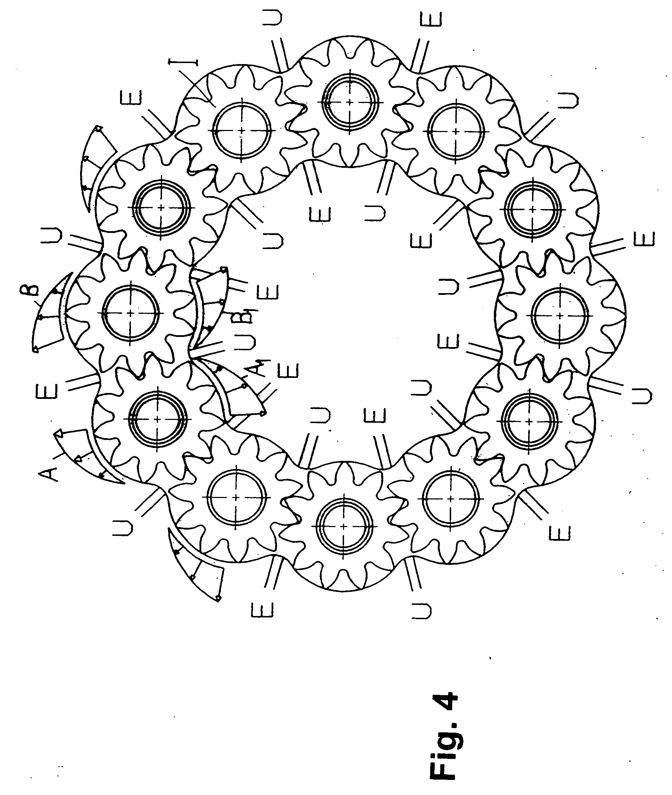

As better shown in Fig. 4, with the volumetric machine according to the present invention, additional power is obtained for each pair of gear elements I, as shown in diagrams A₁ and B₁, on the side of the inner peripheral sequence of inlet and outlet openings E and U, respectively, such a power being added to the output power of a machine having one pair of gear elements according to the prior art as indicated in diagrams A and B at the outer sequence of inlet/outlet openings.

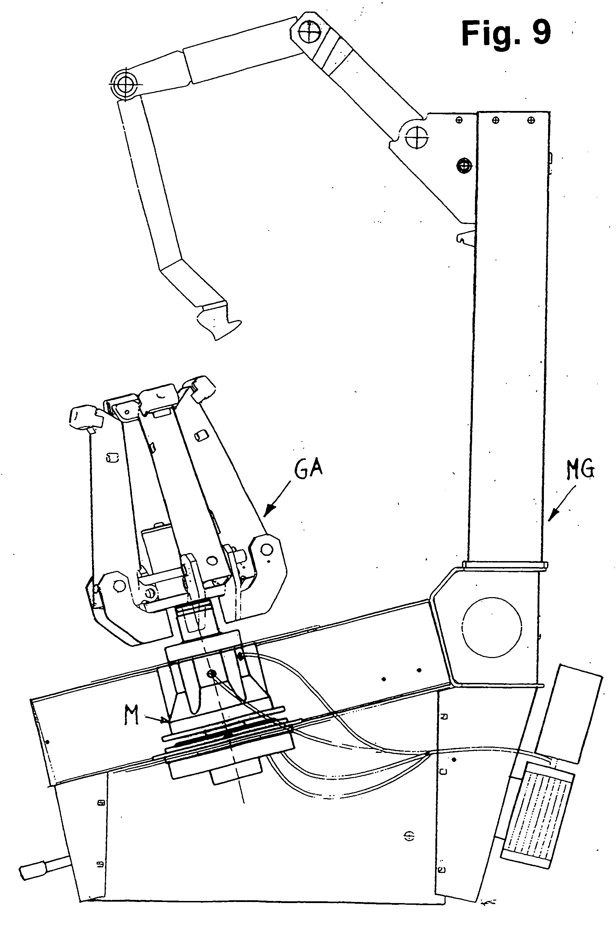

A motor M such as that described above is particularly suitable for driving a hydraulic self-centring assembly GA on a tire assembling/disassembling machine MG (Fig. 9).

The self-centring assembly GA on a tire assembling/disassembling machine MG has the drawback of being slow and at predetermined and fixed speeds it can operate at only two speeds of rotation at the most, both shortcomings being well known to the skilled in the art. Moreover, in some countries, legal restrictions exist on the power installed on board of tire assembling/disassembling machines, whereby monophase version of the motor is not permitted, and thus it would be necessary to resort to alternative costly solutions.

According to another aspect of the present invention, a hydraulic motor M such as that described above is provided, which takes advantage of a hydraulic unit Cl comprising an electric motor ME, a pump PA drawing from a working fluid reservoir SE (Fig. 8) and designed to drive the self-centring assembly GA of a tire assembling/disassembling machine MG.

Advantageously, the electric motor driven hydraulic unit is provided with air operated controls both to start electric motor ME and to drive the arrangement of valves usually provided in a tire assembling/disassembling machine MG.

In an embodiment of a hydraulic motor M according to the present invention, six pairs of gear elements I were used in mutual meshing engagement and with the axes of rotation of the gears arranged to be uniformly angularly spaced from one another along a circumference having a diameter of 121, 7 mm representing the middle line of an annular or ring-shaped housing C, as shown in Figs. 5 and 6. Each gear element I has a number of teeth Z=11, a pressure angle α= 28°30', a pitch diameter of 31.5 mm, and a gear width B=25 mm. Thus, for each gear, a piston displacement of 8.3 c.c. is provided and a total piston displacement of 8,3 x 24 = 199,2 c.c. is then obtained.

Motion is transmitted by six pinion gears P having Z=13, m=2, α=20°, B=20 mm and gearwheel G having teeth Z=48, m=2, α=20°, B=20 mm and a corrected pitch diameter of 95.7 mm, whereby the distance between centers is 121.7 mm equal to the diameter of the circumference along which the axes of rotation of the pairs of gear elements I are arranged.

Thus the drive ratio of the hydraulic gears I to the drive shaft DS is 1/3.69.

Assuming a maximum motor torque of 1400 Nm is obtained, gears I will have to provide a torque of 1400/3.69 = 379 Nm, that divided by 24 (number of gear elements I) will give 15.8 Nm. Moreover, given that the pitch diameter of the gear elements I is 31.35 mm and the thrusting surface is 1.54 cm², the working fluid must have is 65 bar.

Thus, when feeding the motor through its inlet opening BE by means of a pump having a fluid flow rate of approximately 3.7 litre/minute at 65 bar, and assuming a volumetric yield equal to 100, a speed of rotation of the driving shaft DS at its maximum torque of about 5 rpm is obtained.

With a volumetric motor having six pairs of gear elements I fed on both sides, the following piston displacements and speeds of rotations were obtained:

| | | | |
|---|---|---|---|
| 6 pairs | 199 cc | 1^{st} speed | 5 rpm |
| 5 pairs | 166 cc | 2^{nd} speed | 6 rpm |
| 4 pairs | 132.8 cc | 3^{rd} speed | 7.5 rpm |
| 3 pairs | 99.6 cc | 4^{th} speed | 10 rpm |
| 2 pairs | 66.4 cc | 5^{th} speed | 15 rpm |
| 1 pair | 33.2 cc | 6^{th} speed | 30 rpm |

Should the volumetric yield be about 80%, to reach the same speeds the power of the motor feeding pump will have to be increased accordingly. With a 4 litre pump, the electric motor will need to have a power of about 0.5 kW.

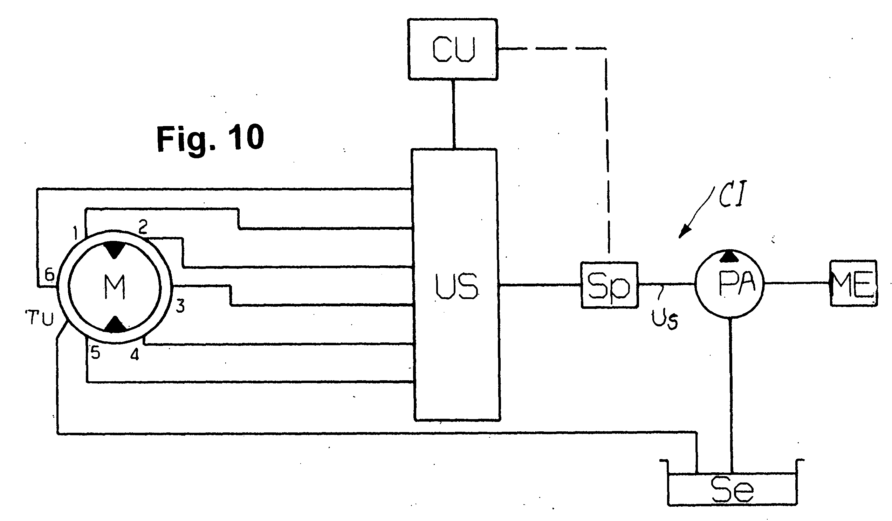

The six separate pairs of gear elements I will be sequentially fed by a delivery valve US -controlled by the pressure downstream of the motor M (i.e. a pressure correlated with the stress applied to motor M) as detected by a suitable pressure sensor SP which generates input signals to a programme control unit CU, e.g. consisting of an electronic card. Thus, valve US will feed a greater number of pairs of gear elements I as the control pressure builds up. Accordingly, the motor, when idle, will rotate at its maximum speed and its number of rotations per unit of time will be decreased as a function of the applied efford or stress (Figs. 10 and 11).

To this end, as shown in Fig. 11, each of the six outer inlet openings E₁, E₃, E₅, E₇, E₉, E₁₁, on one side, is connected only to one inner inlet opening E₂, E₄, E₆, E₈, E₁₀, E₁₂, respectively, and, on the other side, is fed by a respective feeding duct from a delivery valve US, whereas all the outlet openings are connected to a common duct TU communicating with a collection reservoir TU.

Such a sequential feeding is only required for causing rotation in one, e.g. clockwise, direction, whereas for rotation in the opposite direction it will suffice that the motor is rotated at its minimum speed with all pairs of gear elements I being fed.

According to another approach for obtaining the same result is that shown in Figure 8 and provides for an electric variable speed motor ME being used and all pairs of gear elements I being always fed.. Pump PA will thus become a variable fluid flow rate pump, e.g. in the range from a minimum of 4 litres to a maximum of 16 litres.. In this case the operating pressure will vary in a range from a maximum of 65 bar to a minimum of 16.5 bar, while keeping the power onboard the tire assembling/disassembling machine MG unchanged.

In this last solution, preferably the speed of the electric motor ME driving the pump PA is constantly controlled by the stress or force applied to shaft DS of motor M, thereby providing an intelligent system.

The features of a hydraulic motor M according to the present invention are particularly advantageous for a tire assembling/disassembling machine MG in that, if the motor speed were not decreased under stress, it would be necessary to provide a much greater power given by the maximum torque at the highest rpm on-board of a tire assembling/disassembling machine MG, which would be undesirable in a tire assembling/disassembling machine, if only because in a tire fitting step not enough time would be available for the bead to be inserted and fitted into the wheel-rim.

The invention set forth above is susceptible to numerous modification and variations within its scope as defined by the claims.

## Claims

1. A fluid operated reversible volumetric machine comprising a receivingt housing (C), at least two pairs of gear elements (I) mounted for rotation in the receiving housing (C) whereby each gear element (I) being in meshing engagement with two adjoining gear elements (I) equal thereto, an outer peripheral sequence, with respect to the gear elements, of suction openings or inlets (E) alternating with as many delivery openings or outlets (U) formed in the receiving housing (C), and an inner peripheral sequence, with respect to the gear elements, of delivery openings or outlets (U), respectively, alternating with as many suction openings or inlets (E) formed in the receiving housing (E), each outer and inner sequence including a number of inlets (E) and outlets (U) equal to the number of gear elements (I).

2. A volumetric machine as claimed in Claim 1, **characterised in that** said gear elements (I) have the axes of rotation thereof arranged angularly spaced apart from one another along a circumference.

3. A volumetric machine as claimed Claim 1 or 2, **characterised in that** said receiving housing (C) is annular in shape.

4. A volumetric machine as claimed in any preceding Claim 1 to 3, **characterised in that** said inlets (E) are in mutual communication through a manifold duct (TE) fed by a working fluid source, and said outlets (U) communicate with a collection conduct (TU) connected to an exhaust reservoir (Se).

5. A volumetric machine as claimed in Claim 4, **characterised in that** said working fluid source comprises a hydraulic unit (Cl) powered by an electric motor (ME), connected in a circuit to said exhaust reservoir (Se), and comprising a pump (PA) designed to be controlled by said electric motor (ME).

6. A volumetric machine as claimed in Claim 5, **characterised in that** said hydraulic unit (Cl) is provided with air operated controls.

7. A volumetric machine as claimed in Claim 5 or 6, **characterised in that** said electric motor (ME) is a variable speed motor.

8. A volumetric machine as claimed in Claim 5 or 6, **characterised in that** it comprises a delivery valve (US) designed to feed said pairs of gear elements (I) in sequence, and controlled in response to stress or load applied to an output shaft (DS) of said electric motor (ME).

9. A volumetric machine as claimed in any preceding Claim, **characterised in that** it comprises a rotating shaft (RS) for each gear element (I) mounted for rotation in said receiving housing (C), a pinion gear (P) keyed onto a respective rotating shaft (RS) in each pair of gear elements (I), a driven or output shaft (DS) mounted for rotation in said housing (I), and a gear element (G) rotating together with said output shaft (DS) and in meshing engagement with each pinion gear (P).

10. A volumetric machine as claimed in any Claim 5 to 9, **characterised in that** said hydraulic unit (Cl) comprises a sensing means for measuring stress applied to said motor (M), a program control unit (CU) controlled by said sensing means, and a pressurised working fluid delivery valve designed to be controlled by said control unit (CU).

11. A volumetric machine as claimed in Claim 10, **characterised in that** said sensing means for measuring stress applied to said motor (M) comprises a torque measuring device (SC) applied to said output shaft (DS) of motor (M).

12. A volumetric machine as claimed in Claim 10, **characterised in that** said sensing means for measuring stress applied to said motor (M) comprises a pressure gauge (Sp) arranged at the outlet (Us) of said pump (PA).

13. A tire assembling/disassembling equipment when provided with a volumetric machine according to any preceding Claim.
